# EUROPÄISCHE PATENTANMELDUNG

(11) **EP 2 887 507 A1**
(43) Veröffentlichungstag der Anmeldung: **24.06.2015**
(21) Anmeldenummer: 13198027.8
(22) Anmeldetag: 18.12.2013
(51) Int. Cl.: H02K 5/08, H02K 15/12

(54) **Imprägnierung eines Stators einer elektrischen Maschine**

(71) Anmelder: Siemens Aktiengesellschaft, 80333 München (DE)
(72) Erfinder: Menz, Michael, 97618 Hohenroth (DE); Schneyer, Jürgen, 97616 Bad Neustadt (DE)

(57) **Zusammenfassung**

Die Erfindung betrifft ein Verfahren zum Imprägnieren zumindest eines Stators (1) einer jeweiligen elektrischen Maschine, wobei der jeweilige Stator (1) zumindest abschnittsweise zylindermantelförmig um eine Achse (2) ausgestaltet ist und eine elektrische Wicklung (3) aufweist, wobei der jeweilige Stator (1) in einem jeweiligen Gehäuse (4) der jeweiligen elektrischen Maschine angeordnet ist, wobei das jeweilige Gehäuse (4) an seinen beiden axialen Stirnseiten jeweils eine Öffnung (5, 6) aufweist. Weiterhin betrifft die Erfindung eine elektrische Maschine mit einem derartigen Stator (1). Schließlich betrifft die Erfindung eine Vorrichtung zum Imprägnieren zumindest eines Stators (1) einer jeweiligen elektrischen Maschine. Um eine Alternative zu bekannten Imprägnierverfahren von Statoren (1) elektrischer Maschinen bereitzustellen, wird vorgeschlagen, dass das Verfahren die folgenden Verfahrensschritte aufweist:
- Anordnen des jeweiligen Gehäuses (4) derart, dass die Achse (2) des Stators (1) im Wesentlichen in vertikaler Richtung ausgerichtet ist,
- Einführen eines Imprägniermittels in das jeweilige Gehäuse (4) durch die weiter unten angeordnete Öffnung (5) des jeweiligen Gehäuses (4) derart, dass das Imprägniermittel lediglich innerhalb des jeweiligen Gehäuses (4) zumindest bis zu einem jeweiligen Soll-Füllstand (7) steigt.

## Beschreibung

Die Erfindung betrifft ein Verfahren zum Imprägnieren zumindest eines Stators einer jeweiligen elektrischen Maschine, wobei der jeweilige Stator zumindest abschnittsweise zylindermantelförmig um eine Achse ausgestaltet ist und eine elektrische Wicklung aufweist, wobei der jeweilige Stator in einem jeweiligen Gehäuse der jeweiligen elektrischen Maschine angeordnet ist, wobei das jeweilige Gehäuse an seinen beiden axialen Stirnseiten jeweils eine Öffnung aufweist. Weiterhin betrifft die Erfindung eine elektrische Maschine mit einem derartigen Stator. Schließlich betrifft die Erfindung eine Vorrichtung zum Imprägnieren zumindest eines Stators einer jeweiligen elektrischen Maschine.

Ein derartiges Verfahren kommt beispielsweise bei der Herstellung von Elektromotoren zum Einsatz.

Beispielsweise ist bekannt, ein gewickeltes Statorpaket mittels einer Tauchimprägnierung zu imprägnieren, indem das Statorpaket komplett in ein Imprägniermedium, wie Harz, eingetaucht und durchtränkt wird. Anschließend wird das Harz durch Energiezufuhr ausgehärtet und dann das Statorblechpaket in das Motorgehäuse eingedrückt.

Eine Variante der Tauchimprägnierung ist das Fluten, wozu sich die Statoren in einem leeren Becken befinden, in welches das Harz einfließt und langsam nach oben steigt. Das Fluten ist vom Ablauf und den Imprägnierergebnissen im Wesentlichen äquivalent zur Tauchimprägnierung. Es findet z.B. bei Vakuumimprägnieranlagen Anwendung, wo das Imprägniermittel auch unter Vakuum und Überdruck in das Tränkbecken gepumpt werden können muss.

Weiterhin ist der Statorverguss bekannt, bei dem es sich um eine spezielle Technik zur vollständigen Umhüllung von Statorwicklungen handelt. Der Stator wird in eine speziell für diesen Statortyp konstruierte Form eingespannt, wobei die Statorbohrung in etwa vertikal ausgerichtet ist. Die Form wird anschließend mit einer bestimmten Menge Harz gefüllt. Danach wird ein Stempel von oben in die Statorbohrung eingeführt, wobei der Stempel die Vergussmasse von unten durch die Nuten des Stators drückt. Da das Harz die Luft von unten nach oben verdrängt, wird somit weitgehend die Bildung von Lufteinschlüssen vermieden. Nachdem die Vergussmasse ausgehärtet ist, wird der Stempel aus der Bohrung gezogen.

Ferner ist die Träufel- oder Tröpfelimprägnierung bekannt, wozu der Stator auf einen Klemmdorn gespannt ist und in horizontaler Ausrichtung um seine Achse gedreht wird. Während der Drehung wird das Harz aufgetröpfelt. Durch die Kapillarwirkung der Wicklung und die Rotation wird das Harz in die Wicklung gezogen. Durch die Drehbewegung verteilt sich das Harz gleichmäßig im Stator.

Der Erfindung liegt die Aufgabe zugrunde, eine Alternative zu bekannten Imprägnierverfahren von Statoren elektrischer Maschinen bereitzustellen.

Diese Aufgabe wird durch ein Verfahren der eingangs genannten Art dadurch gelöst, dass das Verfahren die folgenden Verfahrensschritte aufweist:
- Anordnen des jeweiligen Gehäuses derart, dass die Achse des Stators im Wesentlichen in vertikaler Richtung ausgerichtet ist,
- Einführen eines Imprägniermittels in das jeweilige Gehäuse durch die weiter unten angeordnete Öffnung des jeweiligen Gehäuses derart, dass das Imprägniermittel lediglich innerhalb des jeweiligen Gehäuses zumindest bis zu einem jeweiligen Soll-Füllstand steigt.

Weiterhin wird diese Aufgabe durch eine elektrische Maschine mit einem derart imprägnierten Stator gelöst.

Schließlich wird diese Aufgabe durch eine Vorrichtung der eingangs genannten Art dadurch gelöst, die Vorrichtung zumindest eine Halteeinheit aufweist, mittels welcher das jeweilige Gehäuse derart haltbar ist, dass die Achse des Stators im Wesentlichen in vertikaler Richtung ausgerichtet ist, wobei die Vorrichtung derart ausgelegt ist, dass ein Imprägniermittel in das jeweilige Gehäuse durch die weiter unten angeordnete Öffnung des jeweiligen Gehäuses derart einführbar ist, dass das Imprägniermittel lediglich innerhalb des jeweiligen Gehäuses zumindest bis zu einem jeweiligen Soll-Füllstand steigt.

Der zu imprägnierende Stator wird vor der Imprägnierung mit einer elektrischen Wicklung versehen und in ein Gehäuse der elektrischen Maschine eingebracht, beispielsweise indem das Gehäuse auf den Stator aufgeschrumpft wird. Der bewickelte und in das Gehäuse eingebrachte Stator wird in im Wesentlichen vertikaler Richtung ausgerichtet, so dass insbesondere die Statorbohrung im Wesentlichen vertikal verläuft. Die Anordnung bzw. Ausrichtung des jeweiligen Gehäuses in im Wesentlichen vertikaler Richtung ist dabei so zu verstehen, dass eine der beiden Öffnungen des Gehäuses weiter unten als die andere Öffnung angeordnet ist. Dies kann insbesondere auch dadurch erreicht werden, dass die Achse des jeweiligen Stators gegenüber der vertikalen Richtung um bis zu 20° oder beispielsweise um bis zu 45° verdreht ist. Vorteilhafterweise ist die Achse jedoch vertikal ausgerichtet mit einer Toleranz von ± 5° oder ± 10°.

Beispielsweise kann das Gehäuse als Topfgehäuse ausgeführt sein, welches einen Gehäuseteil in Form eines Zylindermantels und beispielsweise einen Lagerschild an einem seiner beiden axialen Enden aufweist, wobei das Lagerschild einen Durchbruch in axialer Richtung aufweist, welcher eine der beiden Öffnungen des Gehäuses darstellt. Die andere Öffnung des Gehäuses ist beispielsweise die dem Lagerschild gegenüberliegende, offene Stirnseite des Topfgehäuses.

Durch die jeweilige, weiter unten angeordnete Öffnung wird das Imprägniermittel in das jeweilige Gehäuse eingeführt, so dass das Imprägniermittel bzw. der Imprägniermittel-Füllstand innerhalb des jeweiligen Gehäuses steigt und die Wicklung des jeweiligen Stators in der Nähe der weiter unten angeordneten Öffnung erreicht. Beispielsweise kann als Imprägniermittel ein Harz oder Kunstharz, wie zum Beispiel Epoxidharz, zum Einsatz kommen. Die jeweilige weiter oben angeordnete Öffnung kann für das Beispiel des Topfgehäuses insbesondere der Durchbruch des Lagerschildes sein, so dass das Imprägniermittel durch die weiter unten angeordnete, offene Stirnseite des Gehäuses eingeführt wird. Innerhalb des Gehäuses steigt das Imprägniermittel bzw. der Imprägniermittel-Füllstand weiter und benetzt dabei insbesondere die Wicklungen des Stators, wobei das Imprägniermittel bzw. der Imprägniermittel-Füllstand innerhalb des Gehäuses mindestens bis zum jeweiligen Soll-Füllstand steigt. Vorzugsweise steigt der Füllstand des Imprägniermittels im Gehäuse bzw. Stator jedoch nicht über einen Maximal-Füllstand, welcher beispielsweise einer kompletten Füllung des jeweiligen Gehäuses mit Imprägniermittel oder der Höhe des Randes der weiter oben angeordneten Öffnung des jeweiligen Gehäuses entspricht. Ferner ist vorgesehen, dass das Imprägniermittel nur innerhalb des Gehäuses bzw. des Stators bis zu einer Höhe, welche dem Soll-Füllstand entspricht, steigt und das Imprägniermittel außerhalb des Gehäuse bzw. des Stators nicht bzw. nicht wesentlich nach oben steigt. Während des Einführens des Imprägniermittels kann insbesondere die im Gehäuse befindliche Luft durch die weiter oben angeordnete Öffnung des Gehäuses entweichen.

Somit wird einerseits erreicht, dass das Imprägniermittel die elektrische Wicklung des jeweiligen Stators bis zum jeweiligen Soll-Füllstand benetzt und dadurch imprägniert. Andererseits wird dadurch zuverlässig vermieden, dass das Imprägniermittel die Außenseite des Gehäuses, insbesondere die äußere Mantelfläche des zylindermantelförmigen Gehäuses, großflächig bedeckt und somit verschmutzt.

Der Soll-Füllstand, bis zu welchem das Imprägniermittel innerhalb des jeweiligen Gehäuses mindestens steigen soll, entspricht vorzugsweise zumindest der halben axialen Baulänge des Gehäuses. Damit wird sichergestellt, dass das im Wesentlichen vertikal ausgerichtete Gehäuse und somit auch der Stator von unten mindestens bis zur halben Höhe bzw. mindestens bis zur halben axialen Baulänge mit Imprägniermittel versorgt werden.

Insbesondere kann nach einem Arbeitsschritt, während welchem der Stator von einem axialen Ende bis zur halben axialen Baulänge imprägniert wurde, das Gehäuse um 180° gedreht werden. Nach der Drehung kann der Arbeitsschritt wiederholt werden, so dass der Stator vom gegenüberliegenden axialen Ende bis zur halben axialen Baulänge imprägniert wird. Nach der Durchführung der beiden Arbeitsschritte ist der Stator somit auf der kompletten axialen Baulänge imprägniert.

Das vorgeschlagene Verfahren stellt somit einen neuen, kompletten Ablauf des Imprägnierprozesses bereit. Dabei wird ermöglicht, das jeweilige Gehäuse, insbesondere Topfgehäuse, vor dem Imprägnieren auf den jeweiligen Stator aufzuschrumpfen und erst dann die komplette Anordnung aus Gehäuse und Stator samt den elektrischen Wicklungen zu imprägnieren, ohne das Gehäuse außen wesentlich zu verschmutzen.

Das Verfahren erlaubt insbesondere, eine optimale Wärmeanbindung zwischen dem Blechpaket und dem Gehäuse durch metallisch blanke Berührungsstellen zu erreichen, da das Gehäuse schon vor dem Imprägnieren aufgeschrumpft wurde. Verbleibende Spalten zwischen dem Statorpaket und Gehäuse, die durch Formfehler entstehen können, werden durch das Harz geschlossen, sodass auch hier ein guter Wärmeübergang gewährleistet ist, da das Harz eine höhere Wärmeleitfähigkeit wie Luft besitzt. Somit können elektrische Maschinen hergestellt werden, die über eine sehr gute Entwärmung verfügen, wodurch der Wirkungsgrad der elektrischen Maschine erhöht ist, was beispielsweise die Herstellung kleinerer elektrischer Maschinen mit vergleichsweise großer elektrischer Leistung erlaubt. Dabei handelt es sich bei dem vorgeschlagenen Verfahren um einen vergleichsweise einfachen und schnellen Imprägnierprozess.

Vorzugsweise wird das Imprägniermittel aus dem jeweiligen Gehäuse abgelassen, nachdem das Imprägniermittel innerhalb des jeweiligen Gehäuses zumindest bis zu dem jeweiligen Soll-Füllstand angestiegen ist. Insbesondere kann das Imprägniermittel aus dem jeweiligen Gehäuse abgelassen werden, nachdem eine vorgebbare Zeit ab dem Erreichen des jeweiligen Soll-Füllstands verstrichen ist. Nach der Imprägnierung kann das jeweilige Gehäuse aus dem jeweiligen Halteelement entnommen werden und in Trockenöfen getrocknet werden, so dass die Imprägnierung aushärtet.

Eine derartige Imprägnierung des Stators erlaubt insbesondere die Anwendung neuester Schneidklemmen- und Nadelwickeltechniken bei der Herstellung elektrischer Maschinen, denn diese Techniken erfordern, das Gehäuse vor dem Imprägnieren aufzuschrumpfen.

Gegenüber dem Standard-Imprägnierverfahren der "senkrechten Tauchimprägnierung" in all seinen Varianten bietet das vorgeschlagene Verfahren den Vorteil, das Gehäuse äußerlich nicht wesentlich mit Harz zu benetzen. Eine derartige Benetzung des Gehäuses mit Imprägniermittel ist möglichst zu vermeiden, da an der Außenseite des Gehäuses üblicherweise Kühlrippen vorgesehen sind und die Harzschichten auf den Kühlrippen des Gehäuses den Kühleffekt des Gehäuses vermindern, was insgesamt nachteilig für die elektrische Maschine ist. Weiterhin könnte es beim Lackieren zu Reaktionsprozessen zwischen dem Lack und dem Harz kommen, insbesondere könnte der Gehäuselack weniger gut auf dem mit Imprägniermittel benetzten Gehäuse haften.

Insbesondere gegenüber dem Statorverguss hat das vorgeschlagene Verfahren den Vorteil, dass der Materialverbrauch bzw. die -aufnahme um ein Vielfaches geringer ausfällt, wodurch Kosten gespart werden können. Insbesondere kann das Gehäuse während der Durchführung der Imprägnierung schon einen B-seitigen Flansch, insbesondere jeweils einen Flansch an der A- und an der B-Seite, aufweisen. Während derartige Gehäuse mit dem vorgeschlagenen Verfahren problemlos zu imprägnieren sind, macht das Vorhandensein eines B-seitigen Flansches am Gehäuse einen sauberen Verguss nahezu unmöglich. Kosten lassen sich weiterhin dadurch sparen, dass der beim Statorverguss eingesetzte Silikondorn, dessen Verschleiß hohe Kosten für die Reparatur und den Ersatz der Werkzeuge mit sich bringt, eingespart werden kann.

Auch gegenüber der Träufel- oder Tröpfelimprägnierung weist das vorgeschlagene Verfahren Vorteile auf, insbesondere da typengebundene bzw. statorabhängige Aufnahmeachsen vermieden werden können, welche sich zum Einen auf die Werkzeugkosten auswirken und zum Anderen einen hohen manuellen Aufwand beim Bestücken der Anlage und dem Reinigen des Werkzeugs mit sich bringen. Zusätzlich können beim vorgeschlagenen Verfahren Endscheiben oder sonstige Isolationsstoffe eingesetzt werden, welche sich bei der Träufel- oder Tröpfelimprägnierung sehr negativ auf das Verfahren auswirken.

Bei einer vorteilhaften Ausgestaltung der Erfindung ist der jeweilige Soll-Füllstand zumindest so hoch wie die elektrische Wicklung des jeweiligen Stators an ihrer höchsten Stelle.

Dabei bezieht sich die Höhe der Wicklung auf die im Wesentlichen vertikale Ausrichtung des Gehäuses bzw. des Stators. Somit wird das Imprägniermittel in das jeweilige Gehäuse von unten durch die weiter unten angeordnete Öffnung des Gehäuses eingeführt, wobei das Imprägniermittel bzw. der Imprägniermittel-Füllstand innerhalb des Gehäuses steigt und die Wicklung des Stators in der Nähe der weiter unten angeordneten Öffnung erreicht. Innerhalb des Gehäuses steigt das Imprägniermittel bzw. der Imprägniermittel-Füllstand weiter und benetzt dabei insbesondere die Wicklungen des Stators. Das Imprägniermittel bzw. der Imprägniermittel-Füllstand steigt innerhalb des Gehäuses weiter und erreicht die halbe axiale Baulänge des Gehäuses bzw. des Stators, um weiter zu steigen und schließlich zumindest das Ende der Wicklung des Stators in der Nähe der weiter oben angeordneten Öffnung zu erreichen. Dabei entspricht das Ende der Wicklung des Stators in der Nähe der weiter oben angeordneten Öffnung der höchsten Stelle der Wicklung. Dadurch, dass der jeweilige Soll-Füllstand zumindest so hoch wie die höchste Stelle der Wicklung des jeweiligen Stators ist, wird erreicht, dass die Wicklung des Stators auf ihrer kompletten axialen Länge mit dem Imprägniermittel benetzt und somit imprägniert wird.

Insbesondere kann der jeweilige Soll-Füllstand höher als die elektrische Wicklung des jeweiligen Stators an ihrer höchsten Stelle gewählt werden, wobei der jeweilige Soll-Füllstand vorzugsweise kleiner als der Rand der weiter oben angeordneten Öffnung des jeweiligen Gehäuses bzw. der zuvor erläuterte Maximal-Füllstand ist.

Bei einer weiteren vorteilhaften Ausgestaltung der Erfindung wird das Imprägniermittel von einem Imprägniermittel-Behälter über eine Leitung und ein jeweiliges Adapterstück, welches an die jeweilige, weiter unten angeordnete Öffnung angepasst ist, in das jeweilige Gehäuse eingeführt.

Das jeweilige Adapterstück ist dabei vorteilhafterweise derart ausgeformt, dass das Imprägniermittel zuverlässig durch die weiter unten angeordnete Öffnung des jeweiligen Gehäuses hindurch geleitet werden kann und dabei möglichst wenig bzw. kein Imprägniermittel an die beispielsweise zylindermantelförmige Außenfläche des Gehäuses gelangt. Insbesondere wenn das jeweilige Gehäuse als Topfgehäuse ausgeführt ist und die weiter unten angeordnete Öffnung durch die offene Stirnseite des Topfgehäuses gebildet wird, kann das jeweilige Adapterstück als eine Art Deckel ausgeführt sein, auf welchem das jeweilige Gehäuse aufgesetzt wird und welcher die weiter unten angeordnete Öffnung des Gehäuses fluiddicht abschließt und dabei eine Verbindung der Leitung zu der weiter unten angeordneten Öffnung des Gehäuses herstellt.

Insbesondere kann zur Abdichtung des jeweiligen Adapterstücks zum jeweiligen Gehäuse ein Dichtring bzw. O-Ring zum Einsatz kommen, wobei das jeweilige Adapterstück vorzugsweise einen Zentrierrand aufweist, welcher eine präzise Positionierung des Gehäuses auf dem Adapterstück sicherstellt. Damit Imprägniermittel, welches unerwünschterweise den Dichtring bzw. O-Ring passiert, nicht die Außenseite des jeweiligen Gehäuses verunreinigt, kann das jeweilige Adapterstück einen Ablaufring und eine Austrittsöffnung für das Imprägniermittel, beispielsweise in Form einer in den Ablaufring eingebrachten Kerbe aufweisen. Insbesondere kann durch die Kerbe abfließendes Imprägniermittel gezielt aufgefangen bzw. abgeführt werden. Insbesondere kann das Adapterstück einen konischen Boden aufweisen, in welchen die Leitung mündet.

Vorzugsweise wird der Imprägniermittel-Behälter groß genug gewählt, um eine gewünschte Anzahl von Statoren mindestens bis zum jeweiligen Soll-Füllstand füllen zu können. Ferner sind das jeweilige Adapterstück und die Leitung derart ausgestaltet, dass das Imprägniermittel, welches eine gewisse Viskosität aufweist, schnell genug in das jeweilige Gehäuse eingebracht werden kann.

Insgesamt wird durch die Anordnung umfassend den Imprägniermittel-Behälter, die Leitung und das jeweilige Adapterstück sichergestellt, dass das Imprägniermittel zuverlässig in das jeweilige Gehäuse eingeleitet werden kann und dabei eine Verunreinigung der insbesondere zylindermantelförmigen Außenseite des Gehäuses vermindert bzw. vermieden werden kann. Insbesondere kann somit eine größere Anzahl von Statoren während eines einzigen Arbeitsganges imprägniert werden, wobei sie in den Stator ein jeweiliges Adapterstück vorgesehen ist, welches über die Leitung mit dem Imprägniermittel-Behälter verbunden ist.

Bei einer weiteren vorteilhaften Ausgestaltung der Erfindung wird das Imprägniermittel dabei mittels einer Pumpe von dem Imprägniermittel-Behälter in das jeweilige Gehäuse gepumpt.

Die Pumpe ermöglicht ein schnelleres Imprägnieren des jeweiligen Stators, da das Imprägniermittel mit einem vergleichsweise großen Druck in das jeweilige Gehäuse eingebracht werden kann bzw. ein vergleichsweise großer Volumenstrom des dem jeweiligen Gehäuse zugeführten Imprägniermittels erreicht werden kann. Die Pumpe wird dabei insbesondere anhand einer übergeordneten Steuerung derart betrieben, dass zumindest der jeweilige Soll-Füllstand erreicht wird und insbesondere der zuvor erläuterte Maximal-Füllstand nicht überschritten wird. Insbesondere sind hierfür mehrere Pumpen vorgesehen.

Bei einer alternativen vorteilhaften Ausgestaltung der Erfindung wird der Imprägniermittel-Behälter zum Einführen des Imprägniermittels in das jeweilige Gehäuse dabei angehoben.

Durch das Anheben des Imprägniermittel-Behälters kann das Imprägniermittel in das jeweilige Gehäuse gedrückt werden. Dabei kann der Hubweg des Behälters beispielsweise derart gewählt werden, dass die tiefste Position mit leeren Gehäusen bzw. Statoren einhergeht und insbesondere der Imprägniermittel-Spiegel unterhalb des jeweiligen Adapterstücks bzw. des jeweiligen Zentrierrands des Adapterstücks liegt. Weiterhin kann die höchste Position des Hubwegs so gewählt werden, dass sie mit mindestens bis zum jeweiligen Soll-Füllstand gefüllten Gehäusen bzw. Statoren einhergeht und insbesondere der Imprägniermittel-Spiegel höchstens auf dem Niveau des jeweiligen Maximal-Füllstands liegt. Das Anheben des Imprägniermittel-Behälters kann beispielsweise mittels einer Hebebühne vollzogen werden, welche insbesondere von der zuvor erläuterten Vorrichtung zum Imprägnieren umfasst ist.

Bei einer alternativen vorteilhaften Ausgestaltung der Erfindung ist ein Imprägniermittel-Becken vorgesehen, wobei das jeweilige Gehäuse derart in Bezug auf das im Imprägniermittel-Becken befindliche Imprägniermittel positioniert wird, dass die weiter unten angeordnete Öffnung des jeweiligen Gehäuses oder ein jeweiliges Verlängerungsstück, welches im Bereich der weiter unten angeordneten Öffnung und in Verlängerung des jeweiligen Gehäuses angeordnet ist, in das im Imprägniermittel-Becken befindliche Imprägniermittel eingetaucht ist.

Die Imprägnierung des jeweiligen Gehäuses anhand des Imprägniermittel-Beckens erlaubt insbesondere, eine größere Anzahl von Statoren in einem Arbeitsschritt gleichzeitig zu imprägnieren. Dazu wird das jeweilige Gehäuse derart positioniert, dass die jeweilige, weiter unten angeordnete Öffnung in das im Imprägniermittel-Becken befindliche Imprägniermittel eingetaucht ist. Vorzugsweise ist das jeweilige Gehäuse lediglich einige Millimeter in das Imprägniermittel eingetaucht, so dass die beispielsweise zylindermantelförmige Außenseite des jeweiligen Gehäuses nicht bzw. nicht wesentlich mit Imprägniermittel benetzt bzw. verschmutzt wird. Alternativ kann in Verlängerung des jeweiligen Gehäuses im Bereich der weiter unten angeordneten Öffnung ein Verlängerungsstück vorgesehen sein, durch welches das Imprägniermittel über die weiter unten angeordnete Öffnung in das Gehäuse eindringen kann und welches vorzugsweise fluiddicht mit dem restlichen Gehäuse verbindbar ist. Entsprechend wird das jeweilige Gehäuse derart positioniert, dass das jeweilige Verlängerungsstück in das im Imprägniermittel-Becken befindliche Imprägniermittel eingetaucht ist, wobei vorzugsweise das jeweilige Gehäuse nicht in das Imprägniermittel eintaucht bzw. nicht mit Imprägniermittel benetzt wird. Ist ein jeweiliges Verlängerungsstück vorgesehen, kann dieses jeweils von der oben erläuterten Vorrichtung zum Imprägnieren umfasst sein.

Die erläuterte Positionierung des jeweiligen Gehäuses in Bezug auf das im Imprägniermittel-Becken befindliche Imprägniermittel kann dabei derart erreicht werden, dass das jeweilige Gehäuse mittels der Halteeinheit in Bezug auf das im Imprägniermittel-Becken befindliche Imprägniermittel bewegt wird oder ein jeweiliges Gehäuse in einem Imprägniermittel-Becken fixiert wird, dessen Imprägniermittel-Spiegel beispielsweise durch die Zufuhr von Imprägniermittel ansteigt.

Während der Imprägnierung des jeweiligen Gehäuses sinkt ggf. der Imprägniermittel-Spiegel im Imprägniermittel-Becken leicht ab, was beispielsweise dadurch ausgeglichen werden kann, dass das jeweilige Gehäuse tief genug in das Imprägniermittel eingetaucht ist oder das jeweilige Gehäuse während des Imprägnierens dem sinkenden Imprägniermittel-Spiegel nachgeführt wird. Die Nachführung des jeweiligen Gehäuses kann mittels des Halteelements durchgeführt werden, welches durch eine übergeordnete Steuerung entsprechend angesteuert wird, wobei beispielsweise vorgesehen sein, den Imprägniermittel-Spiegel im Imprägniermittel-Becken in Relation zur Position des jeweiligen Gehäuses mittels eines Detektors zu erfassen.

Die Verwendung des Imprägniermittel-Beckens ermöglicht ein vergleichsweise einfaches und anspruchsloses Imprägnierverfahren, welches damit auch weniger fehleranfällig wird. Insbesondere wenn das Imprägniermittel-Becken groß genug gewählt wird, fällt die Absenkung des Imprägniermittel-Spiegels während der Imprägnierung des jeweiligen Gehäuses vergleichsweise klein aus, so dass die Eintauchtiefe des jeweiligen Gehäuses in das Imprägniermittel sehr gering gewählt werden kann bzw. eine Nachführung des jeweiligen Gehäuses mit dem sinkenden Imprägniermittel-Spiegel nicht unbedingt notwendig ist.

Auch bei der Verwendung des Imprägniermittel-Beckens zur Durchführung des Imprägnierverfahrens wird die beispielsweise zylindermantelförmige Außenseite des jeweiligen Gehäuses nicht bzw. nicht wesentlich mit Imprägniermittel benetzt bzw. verschmutzt.

Bei einer weiteren vorteilhaften Ausgestaltung der Erfindung wird das jeweilige Gehäuse dabei durch die weiter oben angeordnete Öffnung des jeweiligen Gehäuses mit einem Unterdruck beaufschlagt.

Das Einführen des Imprägniermittels durch die weiter unten angeordnete Öffnung in das jeweilige Gehäuse, insbesondere unter Zuhilfenahme eines jeweiligen Verlängerungsstücks, wird insbesondere dadurch erreicht, dass das jeweilige Gehäuse bzw. das jeweilige Verlängerungsstück zum einen leicht in das im Imprägniermittel-Becken befindliche Imprägniermittel eingetaucht ist und zum anderen das jeweilige Gehäuse durch die weiter oben angeordnete Öffnung zumindest teilweise evakuiert wird bzw. mit einem Unterdruck beaufschlagt wird. Durch den Unterdruck wird das Imprägniermittel durch die weiter unten angeordnete Öffnung in das Gehäuse eingesogen, wodurch der Füllstand des Imprägniermittels im Gehäuse ansteigt und eine Benetzung der Wicklung mit Imprägniermittel erreicht wird.

Eine derartige Imprägnierung des jeweiligen Gehäuses lässt sich besonders einfach automatisieren und großtechnisch anwenden, da hierzu lediglich das jeweilige Gehäuse mit einem geeigneten Unterdruck über die jeweilige weiter oben angeordnete Öffnung beaufschlagt werden muss und das jeweilige Gehäuse bzw. das jeweilige Verlängerungsstück geeignet in das Imprägniermittel-Becken eingetaucht werden muss.

Bei einer weiteren vorteilhaften Ausgestaltung der Erfindung wird der jeweilige Füllstand mittels zumindest eines Füllstands-Sensors erfasst.

Der jeweilige Füllstands-Sensor kann beispielsweise als optischer Sensor, als Schwimmer oder als Sichtrohr zum Beobachten des jeweiligen Füllstands ausgestaltet werden, wobei das Sichtrohr fluidtechnisch parallel zum jeweiligen Gehäuse geschaltet ist und somit auch der Flüssigkeitsspiegel des Imprägniermittels im jeweiligen Gehäuse und dem Sichtrohr im Wesentlichen identisch ist. Denkbar ist auch die Ausgestaltung des jeweiligen Füllstands-Sensors als sogenannter Liquiphant, bei welchem der elektrische Widerstand zwischen zwei Sensorkontakten ermittelt wird, wobei sich der elektrische Widerstand ändert und insbesondere das Vorhandensein von Imprägniermittel bei einem gewünschten Füllstand detektiert wird, sobald das Imprägniermittel in den Bereich zwischen die beiden Sensorkontakte eindringt.

Der jeweilige Füllstands-Sensor erleichtert insbesondere eine Automatisierung des Imprägniervorgangs des jeweiligen Gehäuses, insbesondere indem der jeweilige Füllstands-Sensor mit einer übergeordneten Steuerung verbunden ist. Insbesondere kann der jeweilige Füllstands-Sensor von der oben genannten Vorrichtung zum Imprägnieren umfasst sein.

Bei einer weiteren vorteilhaften Ausgestaltung der Erfindung weist die Vorrichtung einen Imprägniermittel-Behälter, ein jeweiliges Adapterstück, welches an die jeweilige, weiter unten angeordnete Öffnung angepasst ist, und eine Leitung, über welche dem Imprägniermittel-Behälter mit dem jeweiligen Adapterstück verbindet, auf.

Bei einer alternativen vorteilhaften Ausgestaltung der Erfindung weist die Vorrichtung ein Imprägniermittel-Becken auf, wobei das jeweilige Gehäuse derart in Bezug auf das im Imprägniermittel-Becken befindliche Imprägniermittel positionierbar ist, dass die weiter unten angeordnete Öffnung des jeweiligen Gehäuses oder ein jeweiliges Verlängerungsstück, welches im Bereich der weiter unten angeordneten Öffnung und in Verlängerung des jeweiligen Gehäuses angeordnet ist, in das im Imprägniermittel-Becken befindliche Imprägniermittel eingetaucht ist.

Das gegebenenfalls vorgesehene jeweilige Verlängerungsstück kann dabei insbesondere von der Vorrichtung umfasst sein.

Bei einer weiteren vorteilhaften Ausgestaltung der Erfindung weist die Vorrichtung dabei eine zumindest eine Evakuiereinheit auf, mittels welcher das jeweilige Gehäuse durch die weiter oben angeordnete Öffnung des jeweiligen Gehäuses mit einem Unterdruck beaufschlagbar ist.

Beispielsweise weist die jeweilige Evakuiereinheit eine weitere Leitung, welche mit der jeweiligen, weiter oben angeordneten Öffnung des jeweiligen Gehäuses verbindbar ist, sowie einen Unterdruckbehälter auf. Über die weitere Leitung kann somit die vor der Imprägnierung im Gehäuse befindliche Luft in den Unterdruckbehälter gesogen werden, wodurch das jeweilige Gehäuse mit einem Unterdruck beaufschlagt wird.

Insbesondere wenn zur Imprägnierung des jeweiligen Gehäuses der oben genannte Imprägniermittel-Behälter und die oben genannte Leitung zum Einsatz kommen, ist der folgende Verfahrensablauf denkbar, wobei die einzelnen Schritte von Personal und/oder von einem Automatisierungssystem durchgeführt werden können. Für das jeweilige, zu imprägnierende Gehäuse ist ein Adapterstück vorgesehen, welches über die Leitung mit dem Imprägniermittel-Behälter verbunden ist. Das jeweilige Gehäuse wird auf das jeweilige Adapterstück gestellt, so dass insbesondere der Gehäuserand passgenau auf einem Dichtring oder einem Zentrierrand des jeweiligen Adapterstücks aufliegt. Dabei ist die Ausrichtung des Gehäuses bzw. der Achse des Gehäuses im Wesentlichen vertikal. Anschließend wird das Gehäuse mit dem Adapterstück verspannt bzw. fixiert, wodurch ein Dichtsitz gewährleistet wird und wozu eine Spann- bzw. Halteeinheit zum Einsatz kommen kann. Dieser Vorgang wiederholt sich mit der Anzahl der zu imprägnierenden Gehäuse, wobei dieser Vorgang insbesondere mit einem Automatisierungssystem auch parallel für die jeweiligen Gehäuse durchgeführt werden kann.

Nach der Bestückung des jeweiligen Adapterstücks mit einem jeweiligen Gehäuse beginnt der eigentliche Imprägnierprozess, wozu beispielsweise ein Pumpensystem zum Einsatz kommen kann, welches Harz über Ausgleichsbehälter in die Statoren pumpt, wobei der Füllstand des Imprägniermittels im jeweiligen Gehäuse anhand einer Füllstandsanzeige oder eines Füllstands-Sensors überwacht werden kann. Das Einpumpen des Harzes wird beendet, sobald der Soll-Füllstand erreicht wurde. Danach oder nach Verstreichen einer vorgebbaren Zeit kann das Harz aus dem jeweiligen Gehäuse abgelassen werden. Der eigentliche Imprägnierprozess kann beispielsweise auch anhand eines Schwerkraftsystems durchgeführt werden, wozu das Harz aus dem Imprägniermittel-Behälter in die Statoren geleitet wird. Dies wird beispielsweise dadurch erreicht, dass der Imprägniermittel-Behälter auf einer Hebebühne angeordnet ist, welche hochgefahren wird, so dass das Harz in die Statoren gedrückt wird. Wiederum kann der Füllstand des Imprägniermittels im jeweiligen Gehäuse anhand einer Füllstandsanzeige oder eines Füllstands-Sensors überwacht werden kann, wozu beispielsweise ein Glas- oder Sichtrohr, ein Schwimmer oder Liquiphant bzw. Kontaktschalter im Glasrohr oder dem jeweiligen Gehäuse angeordnet sein kann. Mittels des Schwimmers kann insbesondere die Hebebühne abgeschaltet werden, so dass das Einführen des Harzes in das jeweilige Gehäuse beendet wird, sobald der Soll-Füllstand erreicht wurde. Danach oder nach Verstreichen einer vorgebbaren Zeit kann das Harz aus dem jeweiligen Gehäuse abgelassen werden.

Nach der Imprägnierung können die Gehäuse aus dem jeweiligen Halteelement entnommen werden und in Trockenöfen getrocknet werden, so dass die Imprägnierung aushärtet.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen Vorrichtung,
- FIG 2: ein zweites Ausführungsbeispiel,
- FIG 3: ein drittes Ausführungsbeispiel,
- FIG 4: ein viertes Ausführungsbeispiel, und
- FIG 5: ein Adapterstück eines fünften Ausführungsbeispiels der erfindungsgemäßen Vorrichtung.

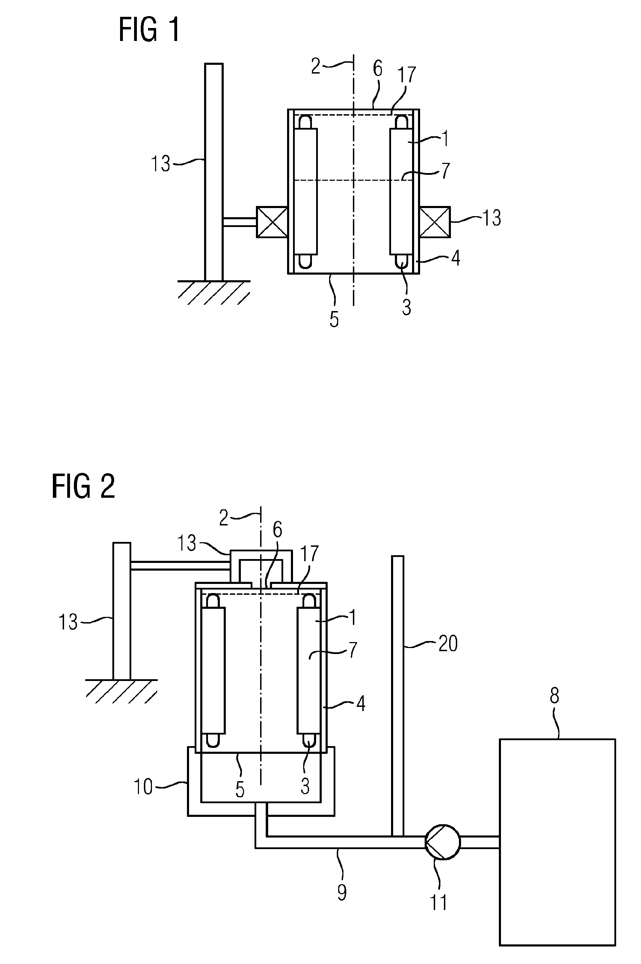

Figur 1 zeigt ein erstes Ausführungsbeispiel der erfindungsgemäßen Vorrichtung. Die Vorrichtung verfügt über eine Halteeinheit 13, mittels welcher ein Gehäuse 4 einer elektrischen Maschine fixierbar ist. In dem Gehäuse 4 ist ein Stator 1 mit einer elektrischen Wicklung 3 untergebracht, wobei der Stator im Wesentlichen zylindermantelförmig um eine Achse 2 ausgestaltet ist. Dabei wird das Gehäuse 4 durch die Halteeinheit 13 derart gehalten, dass die Achse 2 des Stators 1 im Wesentlichen in vertikaler Richtung ausgerichtet ist.

Das Gehäuse 4 weist an seinen beiden axialen Stirnseiten jeweils eine Öffnung 5, 6 auf, wobei durch die im Wesentlichen vertikale Ausrichtung der Achse 2 des Stators 4 die Öffnung 5 weiter unten angeordnete ist als die Öffnung 6. Die Vorrichtung ist dabei derart ausgelegt, dass ein Imprägniermittel in das Gehäuse durch die weiter unten angeordnete Öffnung 5 des Gehäuses 4 derart einführbar ist, dass das Imprägniermittel lediglich innerhalb des Gehäuses 4 zumindest bis zu einem Soll-Füllstand 7 steigt. Somit wird während der Imprägnierung eine großflächige Benetzung bzw. Verschmutzung der Außenseiten des Gehäuses 4 mit Imprägniermittel zuverlässig vermieden.

Vorzugsweise entspricht der Soll-Füllstand 7 zumindest der halben axialen Baulänge des Stators 1 bzw. des Gehäuses 4, wobei der Füllstand des Imprägniermittels im Stator 1 bzw. im Gehäuse 4 möglichst nicht über einen Maximal-Füllstand ansteigt, welcher beispielsweise einer kompletten Füllung des jeweiligen Gehäuses 4 mit Imprägniermittel oder der Höhe des Randes der weiter oben angeordneten Öffnung 6 des Gehäuses 4 entspricht. Insbesondere kann der Soll-Füllstand 7 auch mindestens so hoch wie die elektrische Wicklung 3 des Stators 1 an ihrer höchsten Stelle 17 gewählt werden.

Figur 2 zeigt ein zweites Ausführungsbeispiel der erfindungsgemäßen Vorrichtung. Gleiche Bezugszeichen wie in Figur 1 bezeichnen dabei gleiche Gegenstände. Im Rahmen des Ausführungsbeispiels ist das Gehäuse 4 als Topfgehäuse ausgeführt, wobei die weiter oben angeordnete Öffnung 6 durch einen Durchbruch des Bodens des Topfgehäuses gebildet wird und die weiter unten angeordnete Öffnung 5 der offenen, axialen Stirnseite des Topfgehäuses entspricht.

Das Gehäuse 4 befindet sich auf einem Adapterstück 10, welches an die weiter unten angeordnete Öffnung 5 des Gehäuses 4 angepasst ist. Das Imprägniermittel kann über das Adapterstück 10 anhand einer Leitung 9 aus einem Imprägniermittel-Behälter 8 durch die weiter unten angeordnete Öffnung 5 in das Gehäuse 4 eingeführt werden, wozu eine Pumpe 11 vorgesehen ist. Alternativ zur Pumpe 11 kann der Imprägniermittel-Behälter 8 beispielsweise mittels einer Hebebühne angehoben bzw. abgesenkt werden, wodurch im Imprägniermittel-Behälter 8 befindliches Imprägniermittel in das Gehäuse 8 gedrückt wird bzw. aus dem Gehäuse 8 abfließt. Die Anordnung umfassend das Adapterstück 10, die Leitung 9 und dem Imprägniermittel-Behälter 8 kann dabei ohne Schwierigkeiten auch auf andere Gehäusetypen angewandt werden, welche nicht als Topfgehäuse ausgeführt sind.

Zum Erfassen des Füllstands des Imprägniermittels im Gehäuse 4 ist ein Füllstands-Sensor 20 vorgesehen, welcher beispielsweise ein mit der Leitung 9 verbundenes Sichtrohr und einen optischen Detektor oder einen Liquiphanten zum Erfassen des Imprägniermittel-Stands im Sichtrohr umfassen kann. Hierzu ist der Füllstand-Sensor 20 fluidtechnisch parallel zum Gehäuse 4 geschaltet.

Im Rahmen des Ausführungsbeispiels fixiert das Halteelement 13 das Gehäuse 4, indem das Halteelement 13 das Gehäuse 4 auf das Adapterstück 10 spannt. Hierzu verfügt das Halteelement 13 beispielsweise über eine Art Arm, welche auf dem Boden des Topgehäuses aufliegt und das Gehäuse 4 nach unten auf das Adapterstück 10 drückt. Das Halteelement 13 ist dabei derart ausgelegt, dass im Gehäuse 4 befindliche Luft während des Imprägnierens nicht am Herausströmen durch die weiter oben angeordnete Öffnung 6 des Gehäuses 4 gehindert wird.

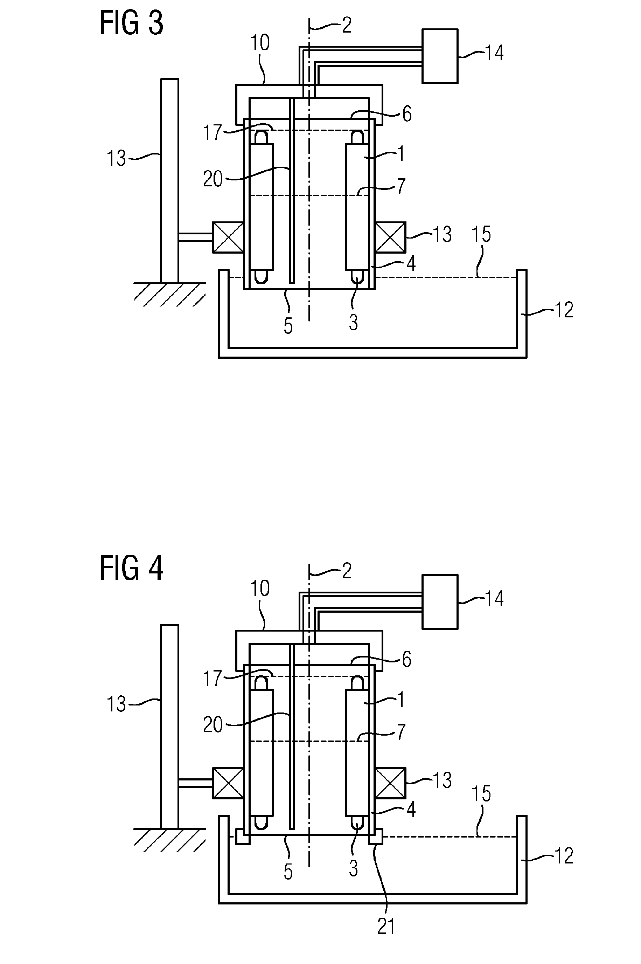

Figur 3 zeigt ein drittes Ausführungsbeispiel der erfindungsgemäßen Vorrichtung. Die Vorrichtung weist einen Imprägniermittel-Becken 12 auf, in welchem sich Imprägniermittel bis zu einem Imprägniermittel-Spiegel 15 befindet. Zur Durchführung der Imprägnierung des Stators 1 wird das Gehäuse 4 in Bezug auf das im Imprägniermittel-Becken 12 befindliche Imprägniermittel derart positioniert, dass die weiter unten angeordnete Öffnung 5 des Gehäuses 4 in das im Imprägniermittel-Becken 12 befindliche Imprägniermittel eingetaucht ist. Insbesondere ist hierzu der Rand der weiter unten angeordneten Öffnung 5 vollständig unterhalb des Imprägniermittel-Spiegels 15 bzw. vollständig in das im Imprägniermittel-Becken 12 befindliche Imprägniermittel eingetaucht. Vorzugsweise ist das jeweilige Gehäuse 4 lediglich einige Millimeter in das Imprägniermittel eingetaucht, so dass die beispielsweise zylindermantelförmige Außenseite des jeweiligen Gehäuses nicht mit Imprägniermittel benetzt bzw. verschmutzt wird. Insbesondere kann vorgesehen sein, dass das Halteelement 13 die korrekte Positionierung des Gehäuses 4 vollautomatisiert durchführt.

Weiterhin weist die Vorrichtung eine Evakuiereinheit 14 auf, mittels welcher das Gehäuse 4 durch die weiter oben angeordnete Öffnung 6 des Gehäuses 4 mit einem Unterdruck beaufschlagbar ist. Insbesondere kann die Evakuiereinheit 14 über ein Adapterelement verfügen, welches dem Adapterstück 10 des zweiten Ausführungsbeispiels ähnlich ist und welches am Gehäuse 4 im Bereich der weiter oben angeordneten Öffnung 6 aufliegt. Das Adapterringelement kann schließlich über eine weitere Leitung mit einem Unterdruckbehälter verbunden sein.

Zur Imprägnierung des Stators wird somit zunächst das Gehäuse 4 wie oben erläutert in Bezug auf das im Imprägniermittel-Becken 12 befindliche Imprägniermittel positioniert und anschließend mittels der Evakuiereinheit 14 derart evakuiert, dass das Imprägniermittel innerhalb des Gehäuses mindestens bis zum gewünschten Soll-Füllstand 7 bzw. mindestens bis zur höchsten Stelle 17 der elektrischen Wicklung 3 steigt und dabei möglichst nicht einen Maximal-Füllstand überschreitet. Zur Erfassung des Füllstands des Imprägniermittels im Gehäuse ist dabei ein Füllstands-Sensor 20 vorgesehen, welcher im Rahmen des Ausführungsbeispiels während des Imprägnierprozesses innerhalb des Gehäuses 4 angeordnet ist. Beispielsweise kann der Füllstands-Sensor 20 als Schwimmer oder Liquiphant ausgeführt sein, bei welchem der elektrische Widerstand zwischen zwei Sensorkontakten ermittelt wird, wobei sich der elektrische Widerstand ändert und insbesondere das Vorhandensein von Imprägniermittel bei einem gewünschten Füllstand detektiert wird, sobald das Imprägniermittel in den Bereich zwischen die beiden Sensorkontakte eindringt.

Figur 4 zeigt ein viertes Ausführungsbeispiel der erfindungsgemäßen Vorrichtung. Im Unterschied zum dritten Ausführungsbeispiel ist ein Verlängerungsstück 21 vorgesehen, welches im Bereich der weiter unten angeordneten Öffnung 5 und in Verlängerung des Gehäuses 4 angeordnet ist. Das Gehäuse 4 wird derart in Bezug auf den Imprägniermittel-Spiegel 15 positioniert, dass das Verlängerungsstück 21 in das im Imprägniermittel-Becken 12 befindliche Imprägniermittel eingetaucht ist. Das Verlängerungsstück 21 ist mit dem Gehäuse 4 vorzugsweise fluiddicht verbunden und erlaubt das Eindringen des Imprägniermittels aus dem Imprägniermittel-Becken 12 in die weiter unten angeordnete Öffnung 5 des Gehäuses 4. Anhand des Verlängerungsstückes 21 und der Evakuiereinheit 14 kann somit Imprägniermittel aus dem Imprägniermittel-Becken 12 in das Gehäuse 4 eingezogen werden, ohne dass das Gehäuse 4 mit Imprägniermittel benetzt bzw. verschmutzt wird.

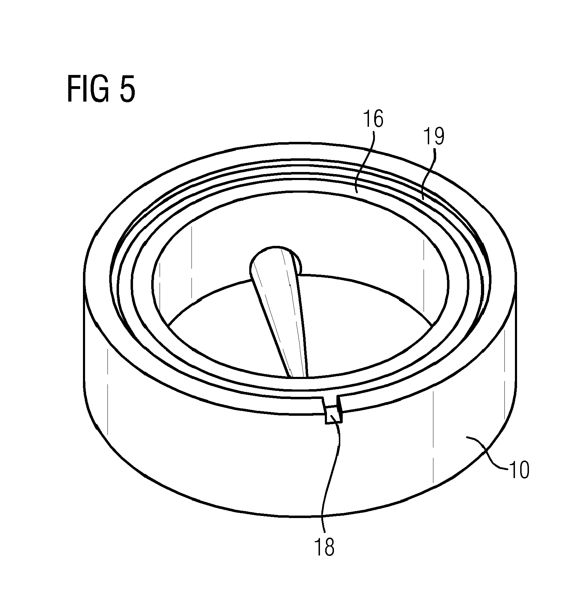

Figur 5 zeigt ein Adapterstück 10 eines fünften Ausführungsbeispiels der erfindungsgemäßen Vorrichtung. Das Adapterstück 10 verfügt über einen Zentrierrand 16, welcher zur korrekten Positionierung eines auf das Adapterstück 10 gesetzten Gehäuses 4 dient. Zur Abdichtung kann beispielsweise ein Dichtring bzw. O-Ring, welcher zwischen dem Gehäuse 4 und dem Adapterstück 10 angeordnet ist zum Einsatz kommen. Weiterhin ist ein Ablaufring 19 vorgesehen, mittels welchem Imprägniermittel aufgefangen werden kann, welches zwischen dem Gehäuse 4 und dem Adapterstück 10 hindurchgedrückt wird. Zum gezielten Abführen des mittels des Ablaufringes 19 aufgefangenen Imprägniermittels ist schließlich eine Kerbe 18 vorgesehen.

Zusammenfassend betrifft die Erfindung ein Verfahren zum Imprägnieren zumindest eines Stators einer jeweiligen elektrischen Maschine, wobei der jeweilige Stator zumindest abschnittsweise zylindermantelförmig um eine Achse ausgestaltet ist und eine elektrische Wicklung aufweist, wobei der jeweilige Stator in einem jeweiligen Gehäuse der jeweiligen elektrischen Maschine angeordnet ist, wobei das jeweilige Gehäuse an seinen beiden axialen Stirnseiten jeweils eine Öffnung aufweist. Weiterhin betrifft die Erfindung eine elektrische Maschine mit einem derartigen Stator. Schließlich betrifft die Erfindung eine Vorrichtung zum Imprägnieren zumindest eines Stators einer jeweiligen elektrischen Maschine. Um eine Alternative zu bekannten Imprägnierverfahren von Statoren elektrischer Maschinen bereitzustellen, wird vorgeschlagen, dass das Verfahren die folgenden Verfahrensschritte aufweist:
- Anordnen des jeweiligen Gehäuses derart, dass die Achse des Stators im Wesentlichen in vertikaler Richtung ausgerichtet ist,
- Einführen eines Imprägniermittels in das jeweilige Gehäuse durch die weiter unten angeordnete Öffnung des jeweiligen Gehäuses derart, dass das Imprägniermittel lediglich innerhalb des jeweiligen Gehäuses zumindest bis zu einem jeweiligen Soll-Füllstand steigt. Weiterhin wird eine elektrische Maschine mit einem derart imprägnierten Stator vorgeschlagen. Schließlich wird vorgeschlagen, dass die Vorrichtung zumindest eine Halteeinheit aufweist, mittels welcher das jeweilige Gehäuse derart haltbar ist, dass die Achse des Stators im Wesentlichen in vertikaler Richtung ausgerichtet ist, wobei die Vorrichtung derart ausgelegt ist, dass ein Imprägniermittel in das jeweilige Gehäuse durch die weiter unten angeordnete Öffnung des jeweiligen Gehäuses derart einführbar ist, dass das Imprägniermittel lediglich innerhalb des jeweiligen Gehäuses zumindest bis zu einem jeweiligen Soll-Füllstand steigt.

## Patentansprüche

1. Verfahren zum Imprägnieren zumindest eines Stators (1) einer jeweiligen elektrischen Maschine,
wobei der jeweilige Stator (1) zumindest abschnittsweise zylindermantelförmig um eine Achse (2) ausgestaltet ist und eine elektrische Wicklung (3) aufweist,
wobei der jeweilige Stator (1) in einem jeweiligen Gehäuse (4) der jeweiligen elektrischen Maschine angeordnet ist, wobei das jeweilige Gehäuse (4) an seinen beiden axialen Stirnseiten jeweils eine Öffnung (5, 6) aufweist,
mit den folgenden Verfahrensschritten:
- Anordnen des jeweiligen Gehäuses (4) derart, dass die Achse (2) des Stators (1) im Wesentlichen in vertikaler Richtung ausgerichtet ist,
- Einführen eines Imprägniermittels in das jeweilige Gehäuse (4) durch die weiter unten angeordnete Öffnung (5) des jeweiligen Gehäuses (4) derart, dass das Imprägniermittel lediglich innerhalb des jeweiligen Gehäuses (4) zumindest bis zu einem jeweiligen Soll-Füllstand (7) steigt.

2. Verfahren nach Anspruch 1,
wobei der jeweilige Soll-Füllstand (7) zumindest so hoch wie die elektrische Wicklung (3) des jeweiligen Stators (1) an ihrer höchsten Stelle (17) ist.

3. Verfahren nach einem der vorhergehenden Ansprüche,
wobei das Imprägniermittel von einem Imprägniermittel-Behälter (8) über eine Leitung (9) und ein jeweiliges Adapterstück (10), welches an die jeweilige, weiter unten angeordnete Öffnung (5) angepasst ist, in das jeweilige Gehäuse (4) eingeführt wird.

4. Verfahren nach Anspruch 3,
wobei das Imprägniermittel mittels einer Pumpe (11) von dem Imprägniermittel-Behälter (8) in das jeweilige Gehäuse (4) gepumpt wird.

5. Verfahren nach Anspruch 3,
wobei der Imprägniermittel-Behälter (8) zum Einführen des Imprägniermittels in das jeweilige Gehäuse (4) angehoben wird.

6. Verfahren nach Anspruch 1 oder 2,
wobei ein Imprägniermittel-Becken (12) vorgesehen ist,
wobei das jeweilige Gehäuse (4) derart in Bezug auf das im Imprägniermittel-Becken (12) befindliche Imprägniermittel positioniert wird, dass die weiter unten angeordnete Öffnung (5) des jeweiligen Gehäuses (4) oder ein jeweiliges Verlängerungsstück (21), welches im Bereich der weiter unten angeordneten Öffnung (5) und in Verlängerung des jeweiligen Gehäuses (4) angeordnet ist, in das im Imprägniermittel-Becken (12) befindliche Imprägniermittel eingetaucht ist.

7. Verfahren nach Anspruch 6,
wobei das jeweilige Gehäuse (4) durch die weiter oben angeordnete Öffnung (6) des jeweiligen Gehäuses (4) mit einem Unterdruck beaufschlagt wird.

8. Verfahren nach einem der vorhergehenden Ansprüche,
wobei der jeweilige Füllstand mittels zumindest eines Füllstands-Sensors (20) erfasst wird.

9. Elektrische Maschine mit einem Stator (1), welcher mittels eines Verfahrens nach einem der vorhergehenden Ansprüche imprägniert ist.

10. Vorrichtung zum Imprägnieren zumindest eines Stators (1) einer jeweiligen elektrischen Maschine,
wobei der jeweilige Stator (1) zumindest abschnittsweise zylindermantelförmig um eine Achse (2) ausgestaltet ist und eine elektrische Wicklung (3) aufweist,
wobei der jeweilige Stator (1) in einem jeweiligen Gehäuse (4) der jeweiligen elektrischen Maschine angeordnet ist, wobei das jeweilige Gehäuse (4) an seinen beiden axialen Stirnseiten jeweils eine Öffnung (5, 6) aufweist,
wobei die Vorrichtung zumindest eine Halteeinheit (13) aufweist, mittels welcher das jeweilige Gehäuse (4) derart haltbar ist, dass die Achse (2) des Stators (4) im Wesentlichen in vertikaler Richtung ausgerichtet ist,
wobei die Vorrichtung derart ausgelegt ist, dass ein Imprägniermittel in das jeweilige Gehäuse (4) durch die weiter unten angeordnete Öffnung (5) des jeweiligen Gehäuses (4) derart einführbar ist, dass das Imprägniermittel lediglich innerhalb des jeweiligen Gehäuses (4) zumindest bis zu einem jeweiligen Soll-Füllstand (7) steigt.

11. Vorrichtung nach Anspruch 10,
wobei die Vorrichtung
- einen Imprägniermittel-Behälter (8),
- ein jeweiliges Adapterstück (10), welches an die jeweilige, weiter unten angeordnete Öffnung (5) angepasst ist, und
- eine Leitung (9), über welche dem Imprägniermittel-Behälter (8) mit dem jeweiligen Adapterstück (10) verbindet, aufweist.

12. Vorrichtung nach Anspruch 10,
wobei die Vorrichtung ein Imprägniermittel-Becken (12) aufweist,
wobei das jeweilige Gehäuse (4) derart in Bezug auf das im Imprägniermittel-Becken (12) befindliche Imprägniermittel positionierbar ist, dass die weiter unten angeordnete Öffnung (5) des jeweiligen Gehäuses (4) oder ein jeweiliges Verlängerungsstück (21), welches im Bereich der weiter unten angeordneten Öffnung (5) und in Verlängerung des jeweiligen Gehäuses (4) angeordnet ist, in das im Imprägniermittel-Becken (12) befindliche Imprägniermittel eingetaucht ist.

13. Vorrichtung nach Anspruch 12,
wobei die Vorrichtung eine zumindest eine Evakuiereinheit (14) aufweist, mittels welcher das jeweilige Gehäuse (4) durch die weiter oben angeordnete Öffnung (6) des jeweiligen Gehäuses (4) mit einem Unterdruck beaufschlagbar ist.
